(19) **Europäisches Patentamt**
**European Patent Office**
**Office européen des brevets**

(11) **EP 2 781 893 A1**

(12) **EUROPEAN PATENT APPLICATION**

(43) Date of publication:
24.09.2014 Bulletin 2014/39

(51) Int Cl.:
*G01F 1/00* (2006.01)    *G01F 1/74* (2006.01)

(21) Application number: 13159958.1

(22) Date of filing: 19.03.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Delphi International Operations Luxembourg S.à r.l.**
**4940 Bascharage (LU)**

(72) Inventors:
• **Parmentier, Michael**
 **6747 Chatillon (BE)**
• **Schmitt, Julien**
 **57970 Kuntzig (FR)**

(74) Representative: **Neill, Andrew Peter**
 **Delphi Diesel Systems**
 **Patent Department**
 **Courteney Road**
 **Gillingham, Kent ME8 0RU (GB)**

(54) **Method to determine the amount of liquid present in a conduit section**

(57)     A method of determining the amount of liquid water present in a section of conduit comprising: determining the amount or rate of flow of liquid incoming into said section; determining the amount and/or rate of condensation or evaporation of said liquid which occurs within said section; adding or subtracting the amount or rate of liquid condensed or evaporated to the liquid inflow.

The methodology uses a minimum of sensors to determine these parameters. The conduit may be a vehicle exhaust and the liquid water. The method can model a series of adjacent sections, and can be used to determine whether it is safe to operate sensors which can be adversely affected by liquid water.

*Fig 2*

**Description**

Technical Field

This disclosure relates to determining the presence and amounts of liquids in sections of conduits or pipes, and has particular but not exclusive application to determine the presence of liquid water in section at locations within exhaust pipes/systems of vehicles.

Background of the Invention

Currently, sensors are often located in vehicle exhaust systems for a variety of applications, such as soot sensors to determine the efficiency of diesel particulate filters. These sensors are often either exposed to high temperatures or are specifically heated to e.g. bum off accumulated soot by sensors heaters. Thus, some sensors such as soot sensors are heated to high temperatures during operational cycles.

Heated exhaust gas sensors such as air/fuel/NOx sensors, can be damaged by water droplets hitting the sensor element when the sensor is heated to such high operating temperatures (typically around 800°C). In order to prevent sensor damages, heater are only switched on when there is no risk of liquid water being present in the exhaust gas. Although water vapour is usually always present in exhaust gas as a result of air humidity and from combustion, liquid water can damage sensors.

Aspects of the invention provide a method to determine the amount (e.g. the presence or not) of liquid water in a section of exhaust, i.e. in the location of a sensor, in order to determine whether it is safe to operate a sensor. Thus the invention provides information useful to determine times when the sensor (or heater therefor), can be switched on. Sensor heaters are preferably switched on as early as possible so as to be used in control algorithms (e.g. for emission control, OBD), but the switch-on must occur only when there is no risk for the sensor.

Various methods exist to determine whether liquid water may be present. Some methods estimate the dew point, that is, the temperature of a gas under which condensation occurs. If some parts in the exhaust wall become cooler than this temperature, liquid water can form. At any location upstream of a sensor, it is therefore crucial for the conditions there to be warmer than the dew point for a certain period of time to make sure that no water can condense on the wall and to ensure that any accumulated liquid water has had time to evaporate. Under such conditions, the exhaust walls are dry and downstream sensors have no risk of being splashed with liquid water. However determination of the dew point is not straightforward and furthermore this does not give an accurate determination of whether liquid water is present at a particular section of the exhaust.

In cases where more than one sensor are installed on an exhaust line, each sensor can be activated at different times, liquid water may be completely evaporated at a first sensor location (closer to the engine, warmer location) while still present at sensors located downstream.

A moisture sensor may be used to detect the presence of liquid water. However, these are expensive especially, if they have to be incorporated solely for the purpose of detecting when to switch on exhaust sensors.

It is an object of the invention to provide an effective, accurate methodology that can determine the presence of liquid is exhaust section(s), and which is cheap to implement and which does not use, or uses a minimum, of additional sensors.

Summary of the Invention

According to the aspects of the invention is provided a method of determining the amount of liquid present, and/or accumulating/dissipating, in a section of conduit comprising: determining the amount and/or rate of flow of liquid incoming to said section; determining the amount and/or rate of net condensation or evaporation of said liquid which occurs within said section; determining the amount and/or rate of liquid water within said section forced through said section by gas flowing in the conduit.

The method may include determining the flow of liquid out of said section, and may inlude determining the gas flow within the conduit and from this determining the amount and/or rate of liquid water forced through said section.

The method may include determining if the amount of liquid present in said section is at a saturation level, and if so determining that the rate or amount of flow of liquid out of said section is equal to the sum of: the amount and/or rates of flow; the flow of liquid forced through the section; plus or minus the amount/rate of net condensation or net evaporation respectively.

The method may include determining if the amount of liquid present in said section is below a saturation level, and if so determining that the flow of liquid out of said section is equal to the amount and/or rate of flow.

The rates may be integrated over time to provided total accumulated amount of liquid in said section. The liquid may be water and the conduit a vehicle exhaust system.

The amount and/or rate of condensation or evaporation may be determined dependent on the temperature within, or on the inner surface of, said section, and the pressure within said section.

The temperature may be measured or estimated from operating parameters of the engine of the vehicle, or from thermal and/or temperature modelling.

The amount and/or rate of condensation or evaporation may be dependent on the saturation concentration of water $[H2O]_{satTw}$.

The amount or rate of condensation or evaporation may be determined by determining/estimating the liquid vapour concentration of gas flowing into the section, and determining the difference between this and the saturation concentration.

The amount/rate of condensation or evaporation occurring within a section may be determined from the equation:

$$k_{evap} (([H_2O]_{satTw} - [H2O]_{in}) \text{ or } k_{conden}( [H_2O]_{in} - [H2O]_{satTw})$$

The values of $k_{evap}$ and $k_{condens}$ are pre-determined or estimated.

The saturation concentration $[H2O]_{saTw}$ may be determined from $f(Tw)/P_{exhaust}$ where $P_{exhaust}$ is the pressure in the exhaust. The concentration of water vapour in, may be estimated or modelled.

The mass of water condensed or evaporated per unit time may be determined from the value of $[H_2O]$condens/evap and the exhaust gas mass flow $m_{exh}$.

The amount/rate of liquid water condensed or evaporated may be determined from the equation

$$m_{w\_condens/evap} = m_{exh} . MM_w/MM_{exh} . [H_2O]_{condens/evap}$$

where $MM_w$ and $MM_{exh}$ are the molar masses of water and exhaust gas respectively.

The method may include determining the liquid water liquid flow out from said section and/or providing this as an input parameter with respect an adjacent downstream section.

The method may include determining the water vapour concentration of the gas leaving the section $[H_2O]_{out}$ and/or providing this as an input parameter with respect an adjacent downstream section.

The water vapour concentration of the gas leaving the section is determined from the equation

$$[H_2O]_{out} = H_2O]_{in} +/- [H2O]_{condens/evap.}$$

The method may comprise estimating the water vapour concentration input to a section from parameters of the engine.

The method may be repeated for a number (N) of adjacent sections, each of the output parameters of either liquid water flow and/or water vapour concentration being used as corresponding input parameters for the adjacent downstream section.

The method may include allowing sensors to be operated when it is determined that there is negligible liquid present in the section in which said sensor is located.

In a further aspect is provided a computer readable medium embodying a computer program adapted to perform any of the above methodology.

In a further aspect is a system to determine the amount of fluid or liquid water present in an conduit or exhaust system, adapted to perform any of the methodology.

Aspects of the invention disclose a method to model the presence of liquid water at significant locations of a conduit such as an exhaust system, exhaust line and/or EGR circuit. In preferred aspects, the exhaust is modeled as comprising one or more adjacent sections (alternatively referred to as elements). It is preferable in such a system to model the water parameters at every location (each section). Aspects of the invention models condensation and evaporation taking place along particular section of the exhaust.

Aspects of the methodology also provide modeling of an exhaust by considering the exhaust to comprise of a number of sub-sections, and consider appropriate parameters within each section to assist in determining whether water is present at a location.

Brief Description of the Drawings

The present invention will now be described, by way of example, with reference to the accompanying drawings, in which:

Figure 1 shows a representation of an exhaust system having internal sensors, to which the invention can be applied;

Figure 2 shows a schematic diagram showing how adjacent sections of an exhaust system can be represented by sections/unit according to one aspect;

Figure 3 shows schematically represent how a section of exhaust is modeled with regards liquid water, according to one aspect;

Figure 4 shows how liquid (water) flow from liquid water in a section may be related and determined from (exhaust) gas flow;

Figure 5 shows a schematic diagram showing the parameters of condensation in an exhaust system, according to one aspect;

Figure 6 shows a schematic diagram showing the parameters of evaporation in an exhaust system, according to one aspect;

Figure 7 shows a schematic diagram of how an exhaust system can be modeled according to one aspect of the invention, according to one aspect.

Description of the Preferred Embodiments

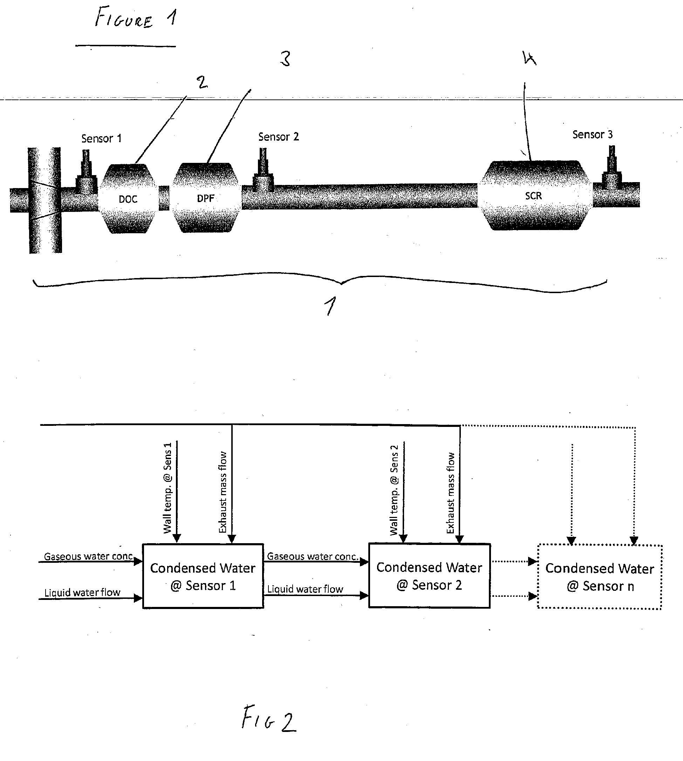

Figure 1 shows a representation of a vehicle exhaust 1 to which aspects of the invention can be applied. The exhaust systems shows a Diesel Oxidation Catalyst (DOC) unit 2 located downstream of an engine exhaust manifold. Downstream of this is located a Diesel Particulate Filter 3 and downstream of this, a Selective Catalytic Reduction (SCR) unit 4 is located. In these or any location within the exhaust, sensors may be located which should only be switched on if liquid water is not present.

Figure 2 shows a schematic diagram showing how adjacent sections of an exhaust system are, according to aspects of the invention, modeled and represented as adjacent units/sections, each of which can be regarded as having an input of gaseous water vapour and liquid water flow from an adjacent upstream section, as well as and a gaseous water vapour and liquid water flow output to an adjacent downstream element/section. Each may have a wall temperature sensor, in order to provide a wall temperature input used to determine the various parameters. Alternatively, the temperature of sections may be estimated by appropriate modeling from heat transfer models of the exhaust; exhaust temperature distribution may be obtained in this way.

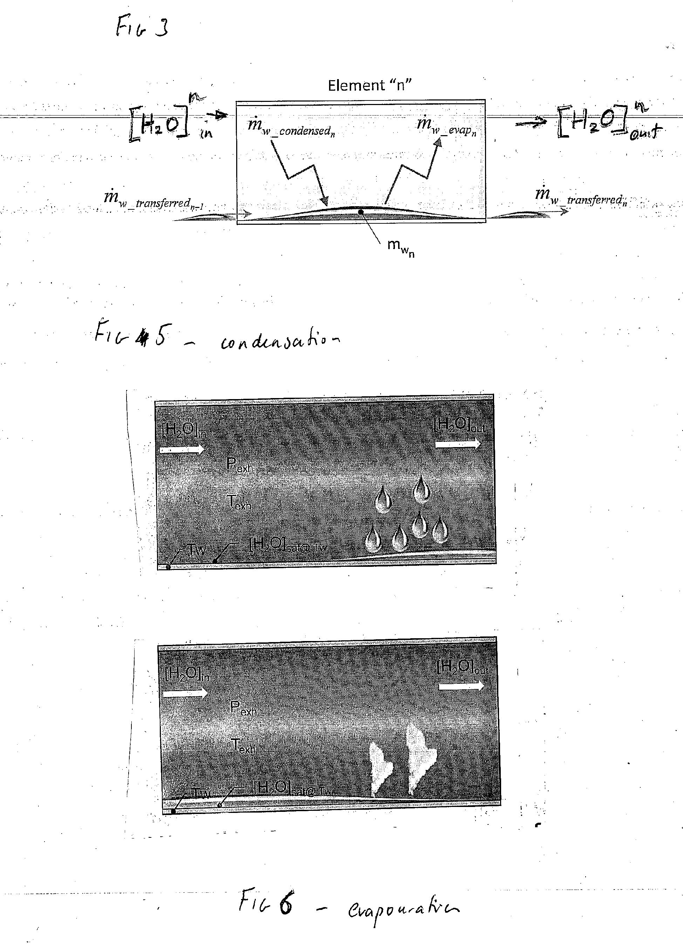

In each section evaporation and condensation occurs. Although these phenomena are concurrent, in examples it is assumed that there is either net condensation of water in the exhaust gas or net evaporation of liquid water in the section (or zero net condensation/evaporation). In addition, any liquid water (e.g. condensed water from a previous section(s) of the exhaust) can move or be forced (by exhaust gas flow or gravity for example) towards an adjacent downstream section. Thus according to examples, the methodology considers the exhaust to comprise of a number of sections, and output parameters with respect to one section being used as input parameters for an adjacent (downstream) section. For a particular section, the amount of incoming liquid water can be added to the amount of condensed water occurring in that section (or the evaporated water subtracted therefrom) to determine total liquid water accumulated in that section or passed to the adjacent downstream section, i.e., determine the amount of liquid assumed to be transferred to the next section. Such parameters are illustrated in figure 3 which represents a section or element of the exhaust. Please note that although the above and hereinafter there is reference to the terms "amount" of liquid water, "amount" of condensation/evaporation, the skilled person would readily realise that this encompasses also liquid water flow rates, evaporation and vaporisation rates.

In figure 3, $m_{w\_transferred/n-1}$ refers to the mass flow of liquid water which is transferred from a previous (n-1) section to section n by flow of exhaust gases and $m_{w\_transferred/n}$ refers to the mass flow of liquid water which is transferred from section n to the next (n+1) section. $m_{w\_condensed\,n}$ refers to the mass of water (per unit time) which is condensed in the section and likewise $m_{w\_evapn}$ the water evaporated (per unit time) in section n.

A general formula which may be applied with respect to the mass of water present/accumulating in an exhaust section/element $m_{wn}$ is shown as in equation 1 below.

$$m_{w_n} = \min\left(\int \left(\dot{m}_{w\_condensed_n} - \dot{m}_{w\_evap_n} + \dot{m}_{w\_transfered_{n-1}} - \dot{m}_{w\_transfered_n}\right), m_{w\_max_n}\right)$$

where

$m_{w_n}$ is the liquid water mass accumulated in the section,

$\dot{m}_{w\_condensed_n}$ is the liquid water mass flow condensing in the section,

$\dot{m}_{w\_evap_n}$ is the liquid water mass flow evaporating in the section,

$\dot{m}_{w\_transferred_{n-1}}$ is the liquid water mass flow transferred from the previous section (n-1),

$\dot{m}_{w\_transferred_n}$ is the liquid water mass flow transferred to the next section,

$\dot{m}_{w\_max_n}$ is the maximum amount of liquid water that the section can store.

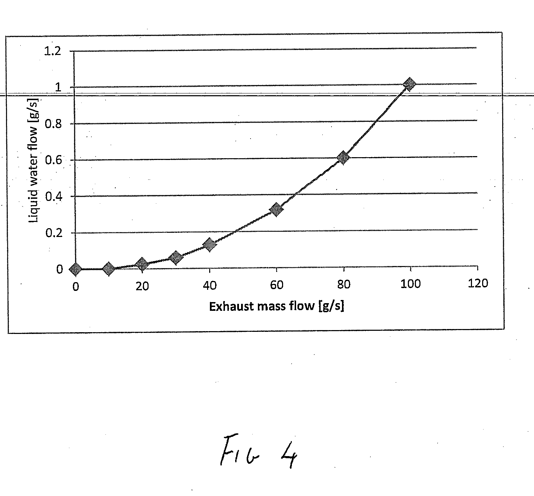

In aspects of the invention model it is assumed that liquid water builds up i.e. accumulates over time in the /section, which is why the values are integrated over time. Liquid water can build up over time up to a maximum amount of liquid water that the section can store (saturation level). Before the saturation level is reached, if we assume we have some liquid water in the section, (so $m_{wn} <$ ,$m_{wnmax}$ and $m_{wn} > 0$) then the value of m_$_w$ transferred is a function of, and determined dependent on the exhaust gas flow. The gas flowing through the section will force water from it. It would be clear to the person skilled in the art how such a determination could be obtained. For example a look-up table or graph, such as the one in figure 4, may be used to related exhaust gas flow to water flowing out from the section. In general therefore, the liquid flow rate out from a section can thus preferably be determined or mapped from exhaust mass flow. As explained above, a table or map of liquid water flow as a function of exhaust flow may be provided. It would be clear to the skilled person how such mapping could be performed so as to for example relate "y" g/s water flow to "x" g/s exhaust flow. Thus, in aspects, it is assumed that as long as there is some liquid water present in the section but the maximum is not reached, the water flowing out of the section is independent of the amount of liquid water in the section. Thus where there is no saturation ($m_{wn} <$ mw_max) and $m_w > 0$.

$$\dot{m}_{\_w\ transferred} = f(exhaust\_flow)$$

Once liquid water has accumulated to saturation level within the section ($m_{wn} = m_{w\_max}$) the output flow from the section is determined as the sum of the liquid water flowing into the section, plus the water condensing in the section (net condensation), and some liquid water from within the section the water being forced downstream by the force of the exhaust gases; again this latter parameter is a function of exhaust gas flow and can be determined from the calibration tables etc. as described above. Thus in essence, at saturation $m_{wn} = m_{w\_max}$:

$$\dot{m}_{\_w\ transferred} = f(exhaust\_flow) + \dot{m}_{\_w\ transfered\_n-1} + \dot{m}_{\_w\ condensed\_n} - \dot{m}_{\underline{w\ evap\_n}}$$

$$(\text{alternatively phrased}) = f(exhaust\_flow) + \dot{m}_{\_w\ transfered\_n-1} + \text{net condensation rate}$$

So there may be a maximum amount of liquid water that the element/section can store; any additional incoming liquid water and additional condensed water will be transferred to the next section, as well as water forced from the section by exhaust flow. $m_{w_n}$ denotes the liquid water present in a section. During a typical driving schedule, starting with a cold exhaust line, the liquid accumulated on the wall increases due to condensation. When the wall temperature reaches a certain temperature, the evaporation starts and $m_{w_n}$ starts to decrease. The rate of decrease also depends on the liquid water flowing between sections. When the accumulated water (mass) is (e.g. reduced to) zero, the wall/section can be considered dry. For a particular sensor in the exhaust line, the heater can be switched on when all upstream elements have no liquid water left on their wall

In aspects of the invention, a conduit such as an exhaust, is considered to comprise a plurality of N sections, 1, 2..(n-1), n, (n+1)...N, and the parameters determined for one section are used to provide input parameters to the adjacent (downstream) section.

The transferred water mass flow is subtracted from the condensed water mass. This is purely a liquid water mass balance in the element and between elements: The equation above shows that the accumulated liquid water on the wall increases due to liquid water transferred from the previous section/element, water condensing in the section/element and decreases due to liquid water flowing out of the section/element or water evaporating in the section/element.

Input parameters for the first section may be estimated. In the case of an exhaust, the amount of liquid water input from the engine (exhaust manifold) to the first section may be assumed to be zero. The water vapour concentration may be estimated from engine operating parameters, which will be explained in more detail below.

In such a way, the exhaust system can be modeled as a series of sections. Each section represents an exhaust pipe section of particular volume. Thus such a model comprises a number of sections (which can be regarded as "subsystems" or "elements") each including a physical model of the condensation and evaporation of water. In preferred embodiments, these are considered to only depend on the difference between the water vapour concentration and the "saturation concentration" (maximum water concentration) calculated for the section temperature. The section temperature may be regarded as the temperature of the inner wall of that exhaust/conduit (section).

In aspects of the invention, the modeling is implemented by using a single condensation factor and evaporation factor, as will be explained in further detail below.

Condensation

With reference to figure 5, which shows relevant parameters, water vapour condenses on the section wall when the partial water pressure/concentration exceeds the saturation pressure concentration at the wall temperature. Similar to the case for evaporation below, concentration of water (it is gaseous water) is dependent on several factors, such as conduit diameter, surface, turbulence (Reynolds number). According to preferred examples of the invention are approximated to:-

$$(3) \quad [H_2O]_{in} - [H_2O]_{out} = [H_2O]_{condens} = k_{condens} \cdot \left( [H_2O]_{in} - [H_2O]_{sat\,@\,Tw} \right)$$

So the (concentration of) vaporized water in minus (concentration of) vaporised water out, provides the amount of condensation which is determined from the expression at right hand side of the equation. Again assuming a very efficient exchange process $k_{condens}$ can be assumed to have a value of 1.

Evaporation

With reference to figure 6, liquid water in a section of the exhaust (pipe) evaporates when the partial water pressure/concentration is lower than the saturation pressure concentration at the wall temperature. The increase of water concentration is dependent on several factors, such as pipe diameter, surface, turbulence (Reynolds number) but according to preferred examples of the invention can be approximated to:-

$$(2) \quad [H_2O]_{out} - [H_2O]_{in} = [H_2O]_{evap} = k_{evap} \cdot \left( [H_2O]_{sat\,@\,Tw} - [H_2O]_{in} \right)$$

where $[H_2O]_{out}$ and $[H_2O]_{in}$ are the concentration of water vapour in the gas flow out of and into the section respectively. $[H_2O]_{evap}$ is a measure of the amount of evaporation and has the same units as the other parameters of the equation.

$[H_2O]_{sat@Tw}$ is the saturation pressure concentration at the wall temperature.

So the (concentration of) vaporized water out minus (concentration of) vaporised water in, provides a value relating to the amount of condensation which is determined from the expression at right hand side of the equation. In the case of a very efficient exchange process such as a catalyst substrate, $k_{evap}$ can be assumed to be 1; if the amount of liquid water is sufficient the gas at the outlet is saturated with water.

With respect to the above determination for both evaporation and condensation, the concentrations of $[H_2O]$ are in mol/mol. That is mol{water}/mol{exhaust gas}.

The saturation concentration is a function of, and can be determined from the values of the conduit section wall temperature and the total exhaust pressure as shown in the equation (4) below:

$$(4) \qquad [H_2O]_{sat} = \frac{f(T_w)}{P_{exhaust}}$$

The wall temperature determines condensation /evaporation on the wall; the wall temperature model only accounts for heat transferred from the gas and to the ambient: it does not account for cooling due to evaporation or warming due to condensation.

In examples of the invention, section wall temperature (modeled or measured) is used to determine evaporation or condensation. Either condensing or evaporating water mass flow ($m_{w\_condensed}$, $m_{w\_evap}$) is then calculated from the exhaust mass flow and the condensing /evaporating concentration as calculated in equations (2) and (3). The following equations can be used to determine the condensation/evaporation rates:

$$(5) \qquad \dot{m}_{w\_condensed} = \dot{m}_{exh} \cdot \frac{MM_w}{MM_{exh}} \cdot [H_2O]_{condens}$$

$$(5) \qquad \dot{m}_{w\_evap} = \dot{m}_{exh} \cdot \frac{MM_w}{MM_{exh}} \cdot [H_2O]_{evap}$$

where $\dot{m}_{exh}$ is the exhaust mass gas flow $MM_w$ and $MM_{exh}$ are the molar mass of water and exhaust flow, expressed in g/mol. These values provide the parameters used in equation 1.

The condensing and evaporating water (rates) are effectively expressed as increase or decrease of water vapour in the gas. They are thus determined by equations and vary with the wall temperature, $[H_2O]_{sat}$ and water concentration at the inlet of the section (subsystem) which in turn varies with engine operating condition.

The molar mass is independent of the gas composition. Values of the $MM_{exh}$ can be preselected. A value in the region of 28.8g/mol may be used, for example.

Thus the additional mass (flow) of condensed/or evaporated water that has been formed in a particular section is determined from the equation below. It is to be noted that this equation assumes either condensation or evaporation takes place at the section so only one of $[H_2O]_{condens}$ or $[H_2O]_{evap}$ is applied.

Thus the reduction or increase in liquid water (per unit time) in a section can be determined. This can be used to determine, along with the incoming liquid water flow, the amount of liquid water accumulated in the section and/or the amount transferred to the next section. This is then used in order to determine whether it is safe to turn on a sensor or sensor heater. Additionally, the accumulated water can be used to determine the liquid water flow flowing out of the section (to the next section downstream). Furthermore, the outlet water vapour concentration can be determined so as to provide the parameter of water vapour concentration out, according to the following equation:

$$(6) \qquad [H_2O]_o = [H_2O]_i - [H_2O]_{condens} + [H_2O]_{evap}$$

iii) inlet gaseous water concentration modeled from the previous (n-1) section (subsystem) output (or resulting from the combustion and the ambient humidity for the first section);

iv) inlet liquid water flow modeled from the previous (n-1) section (subsystem) output; and,

v) total gas pressure at the inlet of the modeled component.

The temperature in i) can be measured or modeled from parameters such as exhaust flow, gas temperature and outside temperature.

The above considers that liquid water (e.g. condensed) condensed within a particular section of the exhaust (as well as liquid water accumulated in the section) can move or be forced wall towards an adjacent section for example by exhaust flow or by gravity.

For a section, the amount/rate of water accumulating (or being reduced) depends on the amount/rate of inflowing liquid water, the amount/rate of condensing/evaporating water occurring in that section as well as the amount of liquid water, accumulated in the section that is forced to exit (flow out) from the section by the force of exhaust gases. The accumulation may be determined to be equal to the water liquid in-flow, plus the net condensation (or minus the net evaporation) and minus any liquid outflow.

The liquid outflow can also be determined. This is dependent on the amount liquid water within the section. When the section is saturated, the liquid outflow will be the inflow plus the net condensed water occurring within the section, as well the flow of liquid water forced from the section by power of exhaust flow. If not yet saturated, the outflow can be determined as just the flow of liquid water forced from the section by power of exhaust flow. Where it is determined that there is no liquid water present in the section, zero liquid outflow is assumed.

Therefore, the amount of liquid present in a section will affect the flow out, and in turn the flow out (as well as the flow in) will affect the level of liquid in the section; thus when modeling the system, parameters will feed into each other. The mass of water present at a section is thus a useful parameter.

It is to be noted that in terms of flows and condensation/evaporation, this can be interpreted as "amounts" and/or "rates" and it would be clear how the various parameters could be determined.

In the embodiments, it is assumed there exists uniform conditions along each section; i.e. having a homogenous environment in the section such as uniform temperature along the section wall. Each section represents an exhaust pipe section of particular volume.

Accurate values of $k_{evap}$ and $k_{condens}$ in equations (2) and (3) can be determined or estimated from the particular geometry of the considered pipe section. For example, a 1m pipe can be assumed to condense all the water available for condensation. $k_{condens}$ would then be 1, while a 10cm pipe is not long enough to condense all the water and $k_{condens}$ would then be calibrated to a small value (0.01 ... 0.1...). The total amount of water condensed on the wall will then be driven by the calibration of $k_{condens}$ and $k_{evap}$.

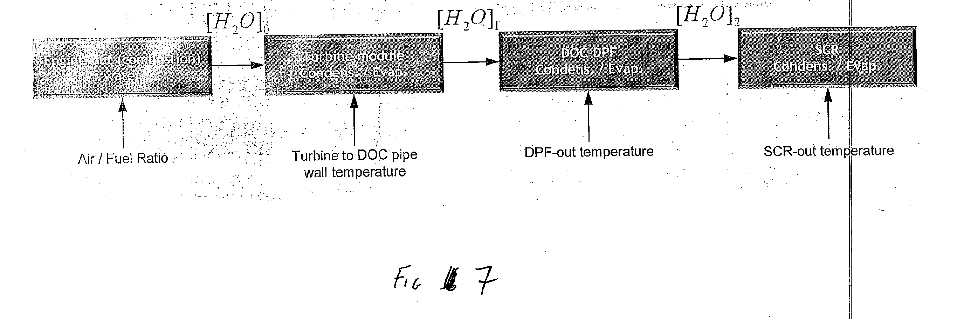

Figure 7 shows a schematic representation of an exhaust system which is shown as a series of units and the exhaust can be regarded as a series of sections. The first unit represents the section of exhaust which is adjacent to the engine exhaust manifold, the second the section that contain a turbine module, the third unit the section that contain the DOC and Diesel Particulate Filter (DPF) units and the fourth, the SCR unit. Of course it is to be noted that the invention is not so limited and the exhaust can be represented by any number of units.

Liquid water mass can saturate to a maximum permissible value within a particular section, and is can thus physically represent a full water pocket. It can be specified how much water can reasonably be stored in the section, and this used in the model. This can be measured by filling manually an exhaust line (or section) with liquid water with the engine stopped and a cold exhaust line, the amount of water stored can then be measured. For example, for a 1m long exhaust pipe, the maximum water amount could be 100-200ml, while a shorter pipe could only accumulate a few ml on its walls. For a particular section, any water condensing above this calibrated threshold is then assumed to be transferred to the next section.

As mentioned, with regard to the first stage or even a single stage, the input parameters of liquid water or water vapour may be determined by alternative methods. In an example, if the first section is considered to be adjacent the exhaust manifold, various measured or estimated parameters such as engine parameters may be used to provide these variables. The inflow of liquid water in the first section may be assumed to be zero. In a preferred method, parameters such as air intake humidity, air/fuel ratio and fuel composition may be used to estimate the concentration of water vapour entering the exhaust system. A higher air/fuel ratio will decrease humidity; a lower air/fuel ratio will conversely increase it. The equation below details one particular method of estimating water vapour concentration:

$$[H_2O]_1 = \frac{1}{1+AF}\left( \frac{y}{2} \frac{MM_{exh}}{MM_{fuel}} + AF \cdot \frac{RH_{air} \cdot p_{w\_sat\_air}}{P_{intake}} \right) + \frac{\dot{m}_{egrlp}}{\dot{m}_{exh}}[H_2O]_{egrlp\_out}$$

where:

$RH_{air}$ -is the ambient air relative air humidity ($RH_{air}$ = 1 when relative humidity is 100%), determined either by an ambient humidity sensor or can be set to 1 to have a worst case water estimation (to make sure in all conditions the sensors are not switched on too early);

$m_{egrlp}$ is the low pressure EGR mass flow (usually known from the engine control software);

$[H_2O]_{egrlp\_out}$ is the gaseous water concentration at the outlet of the low pressure EGR circuit. It can be determined by a similar condensation / evaporation model applied to the low pressure EGR circuit.

Adequate results can still be obtained without implementing the term $\dfrac{\dot{m}_{egrlp}}{\dot{m}_{exh}}[H_2O]_{egrlp\_out}$

In summary, aspects of the invention, provide methodology which models an exhaust system as a plurality/series of (e.g. adjacent) sub-sections or elements. Such systems can be interconnected to model parameters of water at and within each section and thus every sensor location. For such (modeled) systems, it is assumed that liquid water may be flows to the downstream section by the force of the exhaust flow.

The invention provides simple method of determining if liquid water is present at a particular section, and uses effective condensation and evaporation models.

Although reference is made in the description and sub-claims that the liquid or vapour is water, it is to be noted that the term "water" can be replaced by any compound, and the appropriate parameters of concentrations and such like can be amended accordingly.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1.    A method of determining the amount of liquid present, and/or accumulating/dissipating, in a section of conduit comprising:

   a) determining the amount and/or rate of flow of liquid incoming to said section;
   b) determining the amount and/or rate of net condensation or evaporation of said liquid which occurs within said section;
   c) determining the amount and/or rate of liquid water within said section forced through said section by gas flowing in the conduit.

2.    A method as claimed in claim 1 including determining the flow of liquid out of said section.

3.    A method as claimed in claims 1 to 3 including determining the gas flow within the conduit and from this determining the amount and/or rate of liquid water forced through said section in step c).

4.    A method as claimed in claims 2 or 3 including determining if the amount of liquid present in said section is at a saturation level, and if so determining that the rate or amount of flow of liquid out of said section is equal to the sum of: the amount and/or rates of flow as determined in step a); ii) the flow of liquid forced through the section determined at steps c); plus or minus the amount/rate of net condensation or net evaporation respectively, determined at step b).

5.    A method as claimed in claims 2 or 3 including determining if the amount of liquid present in said section is below a saturation level, and if so determining that the flow of liquid out of said section is equal to the amount and/or rate of flow determined at step c).

**6.** A method as claimed in claims 1 to 5 wherein said rates are integrated over time to provided total accumulated amount of liquid in said section.

**7.** A method as claimed in claims 1 or 6 where said liquid is water.

**8.** A method as claimed in claims 1 to 7 wherein said conduit is a vehicle exhaust system.

**9.** A method as claimed in claims 1 to 8 wherein in step b) the amount and/or rate of condensation or evaporation is determined dependent on the temperature within, or on the inner surface of, said section, and the pressure within said section.

**10.** A method as claimed in claim 9 wherein the temperature is measured or estimated from operating parameters of the engine of the vehicle, or from thermal and/or temperature modelling.

**11.** A method as claimed in claim 1 to 10 wherein the amount and/or rate of condensation or evaporation is dependent on the saturation concentration of water $[H_2O]_{satTw}$.

**12.** A method as claimed in claim 1 to 11 wherein the amount or rate of condensation or evaporation is determined by determining/estimating the liquid vapour concentration of gas flowing into the section, and determining the difference between this and the saturation concentration.

**13.** A method as claimed in claims 7 to 12 wherein the amount/rate of condensation or evaporation occurring within a section is determined from the equation:

$$k_{evap} \left( \left( [H_2O]_{satTw} - [H2O]_{in} \right) \text{ or } k_{conden} \left( [H_2O]_{in} - [H2O]_{satTw} \right) \right.$$

**14.** A method as claimed in claim 13 where values of $k_{evap}$ and $k_{condens}$ are pre-determined or estimated.

**15.** A method as claimed in claims 7 to 14 wherein saturation concentration $[H2O]_{satTw}$ is determined from $f(Tw)/P_{exhaust}$ where $P_{exhaust}$ is the pressure in the exhaust.

**16.** A method as claimed in claims 7 to 15 wherein said concentration of water vapour in, is estimated or modelled.

**17.** A method as claimed in claims 7 to 16 wherein the mass of water condensed or evaporated per unit time is determined from the value of $[H_2O]_{condens/evap}$ and the exhaust gas mass flow $m_{exh}$.

**18.** A method as claimed in claim 7 to 17 wherein the amount/rate of liquid water condensed or evaporated is determined from the equation

$$\dot{m}_{w\_condens/evap} = \dot{m}_{exh} \cdot MM_w / MM_{exh} \cdot [H_2O]_{condens/evap}$$

where $MM_w$ and $MM_{exh}$ are the molar masses of water and exhaust gas respectively.

**19.** A method as claimed in claims 7 to 18 including determining the liquid water liquid flow out from said section and/or providing this as an input parameter with respect an adjacent downstream section.

**20.** A method as claimed in claims 7 to 19 including determining the water vapour concentration of the gas leaving the section $[H_2O]_{out}$ and/or providing this as an input parameter with respect an adjacent downstream section.

**21.** A method as claimed in claim 20 where the water vapour concentration of the gas leaving the section is determined

from the equation $[H_2O]_{out} = H_2O]_{in}$ +/- [H2O]condens/evap.

22. A method as claimed in claims 7 to 21 comprising estimating the water vapour concentration input to a section from parameters of the engine.

23. The method according to any preceding claim which is repeated for a number (N) of adjacent sections, each of the output parameters of either liquid water flow and/or water vapour concentration being used as corresponding input parameters for the adjacent downstream section.

24. A method as claimed in any preceding claim wherein including allowing sensors to be operated when it is determined that there is negligible liquid present in the section in which said sensor is located.

25. A computer readable medium embodying a computer program adapted to perform any of the above claims.

26. A system to determine the amount of fluid or liquid water present in an conduit or exhaust system, adapted to perform the method of any of claims.

FIGURE 1

FIG 2

Fig 3

Element "n"

$[H_2O]^n_{in}$

$\dot{m}_{w\_condensed_n}$

$\dot{m}_{w\_evap_n}$

$[H_2O]^n_{out}$

$\dot{m}_{w\_transferred_{n-1}}$

$\dot{m}_{w\_transferred_n}$

$m_{w_n}$

Fig 5 — condensation

Fig 6 — evapouration

*FIG 4*

$[H_2O]_0$     $[H_2O]_1$     $[H_2O]_2$

| Engine-out (combustion) water | → | Turbine module Condens. / Evap. | → | DOC-DPF Condens. / Evap. | → | SCR Condens. / Evap. |

Air / Fuel Ratio

Turbine to DOC pipe wall temperature

DPF-out temperature

SCR-out temperature

Fig. 7

Europäisches
Patentamt

European
Patent Office

Office européen
des brevets

# EUROPEAN SEARCH REPORT

Application Number

EP 13 15 9958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Leanne Haworth: "MODELLING THE EFFECT OF CONDENSATION AND EVAPORATION OF WATER ON THE TRANSIENT TEMPERATURES INSIDE THE EXHAUST SYSTEM OF AN IC ENGINE DURING A COLD START", <br> , <br> 31 March 2010 (2010-03-31), pages 37-49, XP055072243, <br> Retrieved from the Internet: <br> URL:http://hdl.handle.net/10019.1/4285 <br> [retrieved on 2013-07-22] <br> * page 37 - page 49 * <br> ----- | 1-26 | INV. <br> G01F1/00 <br> G01F1/74 |
| A | WO 2009/112947 A2 (TOYOTA MOTOR CO LTD [JP]; ENOMOTO HIROSHI [JP]; MATSUNAGA AKIO [JP]) 17 September 2009 (2009-09-17) <br> * the whole document * <br> ----- | 1-26 | |
| A | US 4 864 844 A (MORITZ ROBERT R [US]) 12 September 1989 (1989-09-12) <br> * the whole document * <br> ----- | 1-26 | TECHNICAL FIELDS SEARCHED (IPC) <br><br> G01F |

The present search report has been drawn up for all claims

| Place of search | Date of completion of the search | Examiner |
|---|---|---|
| Munich | 22 July 2013 | Fenzl, Birgit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 9958

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2013

| Patent document cited in search report | | Publication date | Patent family member(s) | | Publication date |
|---|---|---|---|---|---|
| WO 2009112947 | A2 | 17-09-2009 | AT | 555295 T | 15-05-2012 |
| | | | EP | 2252785 A2 | 24-11-2010 |
| | | | US | 2010300068 A1 | 02-12-2010 |
| | | | WO | 2009112947 A2 | 17-09-2009 |
| US 4864844 | A | 12-09-1989 | NONE | | |

EPO FORM P0459

For more details about this annex : see Official Journal of the European Patent Office, No. 12/82